# EUROPEAN PATENT APPLICATION

(11) **EP 2 393 225 A1**
(43) Date of publication of application: **07.12.2011**
(21) Application number: 11405226.9
(22) Date of filing: 01.03.2011
(51) Int. Cl.: H04B 10/10

(54) **Visible light communication apparatus for in-flight entertainment system in aircraft cabin**

(30) Priority: 02.06.2010 JP 2010126545
(71) Applicant: JAMCO CORPORATION, Mitaka, Tokyo (JP)
(72) Inventor: Mizukami, Mineo, Tokyo (JP); Hozumi, Hiroyuki, Tokyo (JP); Shiomori, Jun, Tokyo (JP)
(74) Representative: Stona, Daniel

(57) **Abstract**

The invention provides a visible light communication apparatus for in-flight entertainment system in an aircraft cabin in which a visible light communication (VLC) system is used for wireless communication of various contents data for in-flight entertainment. The invention provides a visible light communication apparatus for in-flight entertainment system in an aircraft cabin comprising an illuminating apparatus for illuminating the aircraft cabin via light emitted from an OLED element 20, and a visible light communication apparatus 19 for modulating a light quantity of light emitted from the OLED element 20 via electric signals to perform optical communication from an area distribution box 17 to a seat electronics box 18 by modulating the emission of the OLED element 20 so as to construct an in-flight entertainment system for offering information for service to passengers within the aircraft cabin.

## Description

### Field of the invention

The present invention relates to a visible light communication apparatus for in-flight entertainment systems in aircraft cabins.

### Description of the related art

Elements such as LEDs (light emitting diodes) and organic ELs (organic light emitting diodes, hereinafter also referred to as OLED) are recently attracting attention as new light sources for illuminating the interior of aircraft cabins. Especially, OLEDs are surface-emitting elements and the emitting bodies can have very small thicknesses, so that they can be directly attached to the ceilings or walls for illumination, and thus, they are recognized to be revolutionary illuminating devices.

The present inventors have considered applying such OLEDs adopted in the future for illuminating the interior of aircrafts to uses other than lighting, such as for data communication. It is already known that communication is made possible using the various levels of intensity of illuminating lights. The intensity of light from a light source is modulated via a frequency set smaller than a range perceptible to the human eye, and the light illuminating a remote location emitted from the light source is converted into electric signals and demodulated so as to receive signals. Such communication system using modulation of visible light is known as a visible light communication (VLC) system.

Currently, in-flight entertainment (IFE) systems are disposed in aircraft cabins for providing entertainment and information services to passengers, enabling the passengers to enjoy contents data distributed to respective passenger seats. Normally, the contents data supplied in the in-flight entertainment system are stored in a cabin file server (CFS) at a head end of the aircraft and updated periodically, but in some cases, the data are acquired during flight through satellite network.

A copper-wire-based communication system is used for distributing data from the cabin file server via an area distribution box (ADB) on the zone end to seat electronics boxes (SEB) disposed on the respective seats for passengers.

Contents of the in-flight entertainment include movies, guidance information, games and music, and are recently expanded to live television channel contents acquired from broadband servers of ground-based local stations using satellite networks, and even further, to internet and e-mail connections. Such contents can be viewed through display screens provided on the respective seats for passengers.

Furthermore, some aircrafts offer services to enable personal portable data devices that passengers carried into the aircraft or portable data devices rented to passengers during flight to be connected o the in-flight entertainment system.

The following non-patent documents refer to the conventional art related to organic EL illumination and visible light communication: (non-patent document 1) Hitoshi KUMA, "Developing Trend of Organic EL Illumination", Idemitsu Gihou, Vol. 51, No. 3, pages 373-380, published Oct. 15, 2008; (non-patent document 2) Visible Light Communications Consortium, "Joint Development and Cooperation of World's Most Advanced Light Communication", News Release, published Oct. 24, 2008.

However, one serious drawback for installing such in-flight entertainment systems in aircrafts and performing maintenance operation thereof is that they require enormous costs. Further, the contents for entertainment and information provided in the current in-flight entertainment systems are arranged for in-flight use, which are unsatisfactory from the viewpoint of quality of image and sound, and in actual use, not enough information can be acquired at high speed.

Therefore, in order for the passengers to acquire high quality information at high speed, it is either necessary to improve the performance of the communication network or to construct a new communications network. Further, there are restrictions in the frequency bands and electric field intensities that can be used for wireless communication within the aircraft cabin, and in order to improve the capacity and speed of transferred data, significant amounts of costs are required. Thus, from the viewpoint of cost-effectiveness, no effective means were discovered for solving the above-mentioned problems of the prior art.

Further, in current aircraft cabins where indirect lighting and direct lighting are mixed, it was predicted that the visible light communication system may not function in some areas. However, if it becomes possible to illuminate the cabin via direct lighting using OLEDs, the barrier for introducing the visible light communication system to the aircraft cabin may be gone.

### SUMMARY OF THE INVENTION

The present invention aims at solving the problems of the prior art by providing a visible light communication apparatus for in-flight entertainment system in an aircraft cabin used for wireless communication of various contents data for in-flight entertainment which adopts the visible light communication system.

The visible light communication apparatus for in-flight entertainment system in an aircraft cabin according to the present invention characterizes in using an OLED element for illuminating the aircraft cabin, and adopting a visible light communication system for modulating a light quantity of light emitted from the OLED element via electric signals to construct an in-flight entertainment system for providing information to passengers for service.

Further, the visible light communication apparatus for in-flight entertainment system in an aircraft cabin according to the present invention characterizes in that the OLED element is used as the light source for illuminating the aircraft cabin and as a communication means of the in-flight entertainment system constructed in the aircraft to be used for downward data communication circuit for distributing various contents data for the in-flight entertainment system from an area distribution box to respective seat electronics boxes using a communication means for visible light communication system.

Furthermore, the visible light communication apparatus for in-flight entertainment system in an aircraft cabin according to the present invention characterizes in that in the visible light communication system, the electric current supplied to an illuminating element is electrically modulated to utilize the intensity of emitted light of the OLED element for data communication, and in order to set a high light modulation frequency that determines the transfer speed of communication data, a light wavelength region irradiating only a fluorescence of emission from a singlet having a short attenuation time is used without irradiating phosphorescence from a triplet having a long attenuation time from the OLED element, so as to set a high modulation frequency and perform high-speed communication.

Even further, the visible light communication apparatus for in-flight entertainment system in an aircraft cabin according to the present invention characterizes in that modulated data is detected from the illuminating light either by setting a light wavelength to be detected by the light receiving sensor to a fluorescence emission wavelength region or by assembling with the light receiving sensor an optical filter for preventing phosphorescence from entering the light receiving sensor.

Moreover, the visible light communication apparatus for in-flight entertainment system in an aircraft cabin according to the present invention characterizes in that a white-color OLED element having combined a blue fluorescence and an orange and green phosphorescence is used, wherein a blue wavelength region having superior emission attenuation characteristics since it does not include phosphorescence is used for data communication so as to enhance transmission speed.

Further, the visible light communication apparatus for in-flight entertainment system in an aircraft cabin according to the present invention characterizes in that during a dim out period of the illumination within the aircraft cabin during which the quantity of illuminating light within the cabin is lowered, a current supplied to the white OLED element is attenuated compared to normal times, wherein the white OLED element has a characteristics that red and green-based phosphorescence is attenuated greater than the blue-based fluorescence as the current supplied thereto is attenuated from a rated value.

According to the present invention in which the visible light communication system is used for downward data communication between the area distribution box and the seat electronics boxes of the in-flight entertainment system, a significant cost reduction can be expected compared to the prior art systems. A high-speed network realizing a data transfer speed of 100 Mbps to 500 Mbps can be expected in the visible light communication system. The prior art high-speed network circuits constructed between the area distribution box and the seat electronics boxes (such as IEEE 1394 or 100 bT Ethernet (Registered Trademark)) or the I/O and control units connected thereto will become unnecessary according to the present invention.

Further, by disposing area distribution boxes in determined areas and transmitting data therefrom via visible light communication, the communication speed for respective seats can be improved from the prior art level of approximately 3 Mbps to as high as approximately 15 Mbps. Even further, by eliminating the high-speed circuits using wires, the weight of wires can be significantly reduced.

The effect of such high-speed data circuit can be exerted even further when passengers connect personal portable data devices to the network through the external portable data device connecting terminals disposed on the seats.

As described, by providing a new communication network outperforming the conventional data transmission performance of in-flight communication systems, the passengers can acquire high quality contents information through high speed transmission, and the costs for realizing such system can be significantly reduced compared to the prior art in-flight entertainment systems.

Furthermore, since blue-colored lights provide a night-like image to the human eye, the light quantity during a dim out period can be set relatively high. Since OLED illumination has a wide emission range, data communication via visible light communication can be realized even in dim out environment by combining light receiving sensors with condensing lenses.

### BRIEF DESCRIPTION OF THE DRAWINGS

Fig. 1 is a block diagram of an in-flight entertainment system according to embodiment 1 of the present invention;

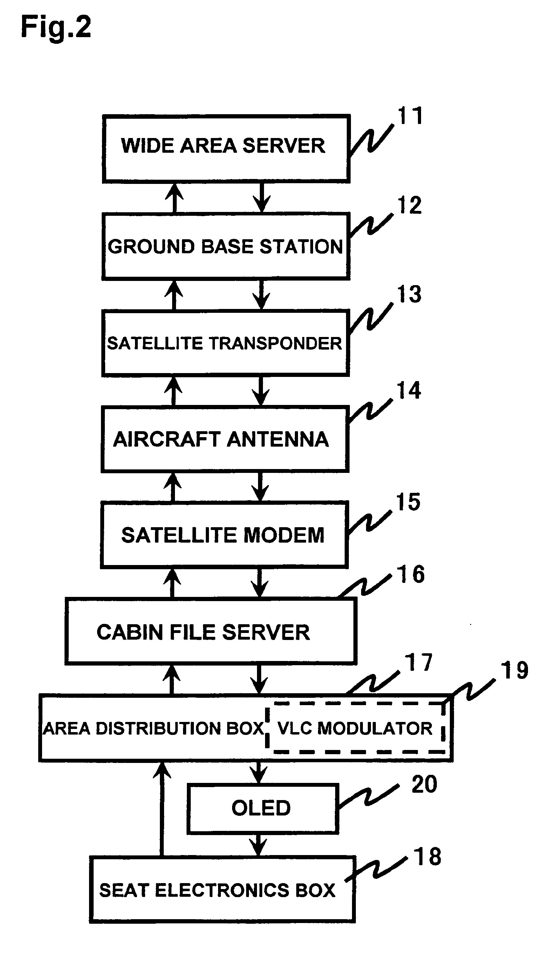

Fig. 2 is a flowchart of the in-flight entertainment system according to embodiment 1 of the present invention;
Fig. 3 is a configuration diagram of the OLED used in the in-flight entertainment system according to the present invention;
Fig. 4 is an image diagram showing an in-flight entertainment system according to embodiment 2 of the present invention;
Fig. 5 is a block diagram of an in-flight entertainment system according to the prior art; and
Fig. 6 is a flowchart showing the in-flight entertainment system according to the prior art.

### DETAILED DESCRIPTION OF THE PREFERRED EMBODIMENTS

Now, the preferred embodiments for carrying out the present invention will be described with reference to the drawings.

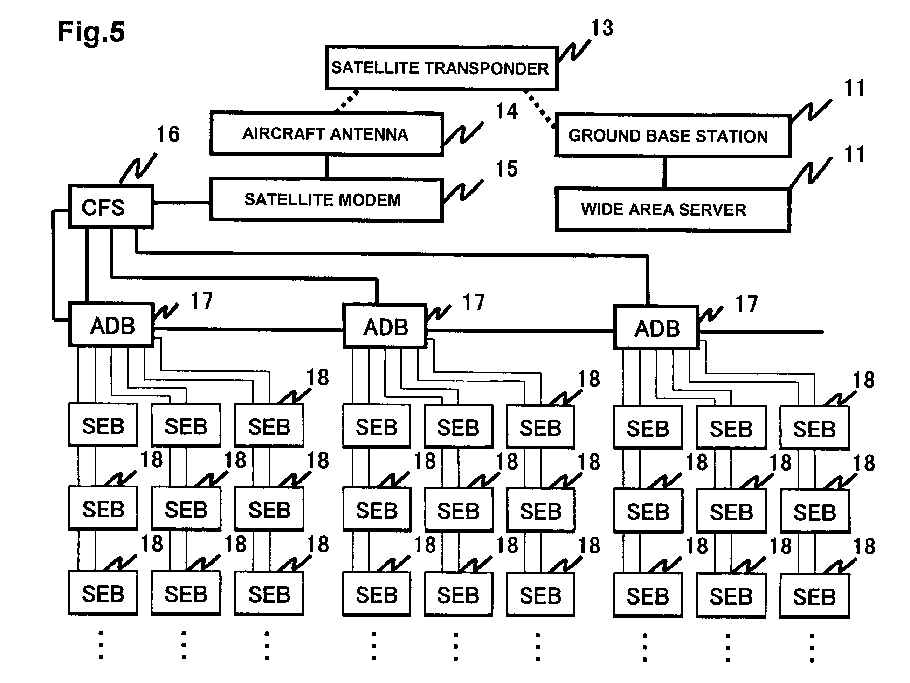

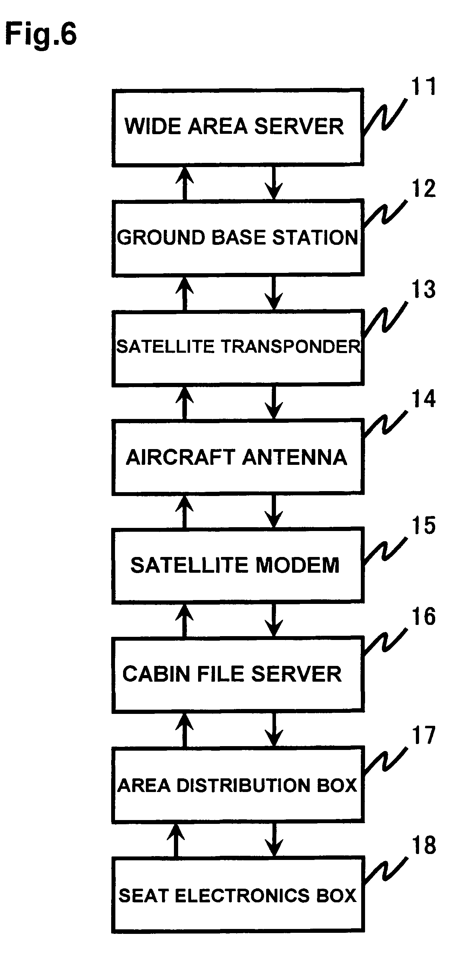

Fig. 5 is a block diagram of a typical existing audio video on-demand (AVOD) in-flight entertainment system according to the prior art, and Fig. 6 is a flowchart of the in-flight entertainment system according to the prior art.

In Figs. 5 and 6, data transmission from a cabin file server 16 to an area distribution box 17 utilizes a 100 bT Ethernet and an ATM circuit. The area distribution box 17 includes a distributor for distributing high speed data sent from the cabin file server 16 to three lines of output for sending data to seat electronic boxes 18.

High speed data divided into three lines in the area distribution box 17 to be sent to the respective seat electronics boxes 18 are distributed to the respective seat electronics boxes 18 using IEEE 1394, for example. A maximum of 30 seat electronic boxes 18 can be connected via DG chains. The seat electronic boxes 18 on the seat end can have displays, headphones, game controllers, telephone handsets, and connecting terminals for portable data devices and power terminals for supplying power to the portable data devices used by the respective passengers.

The passenger can use the in-flight entertainment system by manipulating a touch button switch of the program displayed on a display screen. The operation signal is sent from the seat electronics box 18 to the area distribution box 17 via a communication circuit such as an RS-485 and further sent from the area distribution box 17 to the cabin file server 16 via a communication circuit such as a 100 bT Ethernet, based on which necessary information is obtained from the cabin file server 16.

### [Embodiment 1]

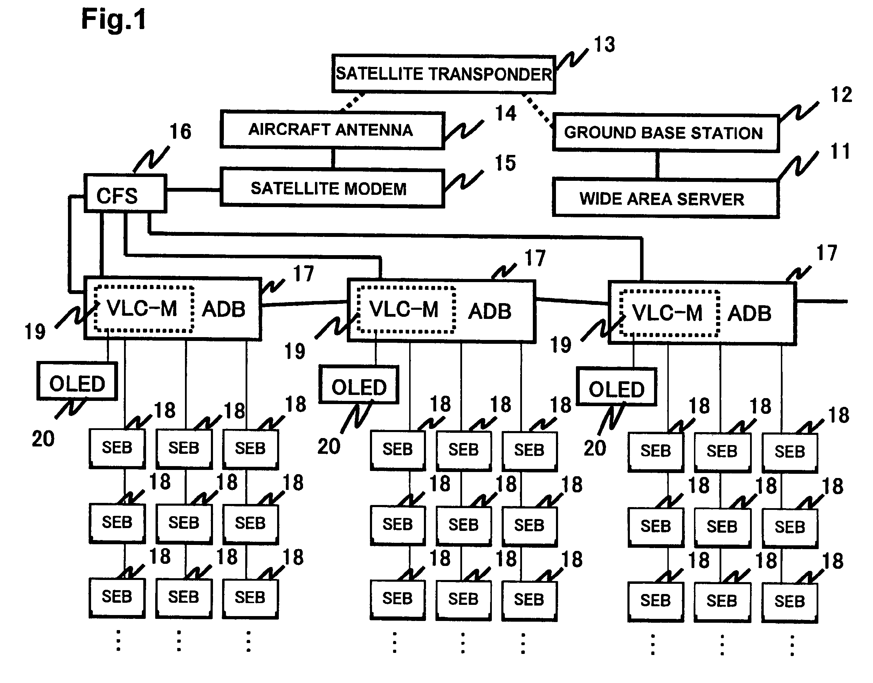

In contrast, as shown in Fig. 1, the in-flight entertainment system according to embodiment 1 of the present invention not having the above-mentioned high-speed communication circuit between the area distribution box 17 and the seat electronics box 18 adopts a wireless communication circuit using visible light communication system instead. Further, the output data from the cabin file server 16 is converted via a modulator 19 for visible light communication disposed within the area distribution box 17 into modulated signals optimized for visible light communication, which is superposed to the power line of the OLED 20 disposed on the zone end and sent out with the illuminating light as optical signals into the cabin.

The seat electronics box 18 on the zone end receives the illuminating light from the OLED 20 via a light receiving sensor attached to an upper area of the seat. The light receiving sensor does not always face upward depending on the position and angle of the backrest of the seat, but as long as the light receiving sensor is within the range of the illuminating light source, the light receiving sensor will not fail to receive light.

Since the light source for visible light communication is used in common, the light receiving sensor can also be used in common among the seat electronics boxes 18. The output signal of the light receiving sensor is connected to the seat electronic box 18, where the modulated signal is amplified to a predetermined level via an AGC amplifier and then demodulated via a demodulator to the data sent out from the area distribution box 17.

The seat electronic boxes 18 have displays, headphones, game controllers, telephone handsets, and connecting terminals for portable data devices and power terminals for supplying power to the portable data devices used by the respective passengers.

The passengers can use the in-flight entertainment system by manipulating a touch button switch of the program displayed on a display screen. The operation signal is sent from the seat electronics box 18 to the area distribution box 17 via a communication circuit such as an RS-485 and further sent from the area distribution box 17 to the cabin file server 16 via a communication circuit such as a 100 bT Ethernet, based on which necessary information is obtained from the cabin file server 16.

In such visible light communication system, electromagnetic waves may possibly leak from the OLED element 20. Therefore, it is necessary to dispose an electromagnetic shield to the mounting surface of the OLED and to have the transparent electrode on the light emitting surface side (positive side) earthed.

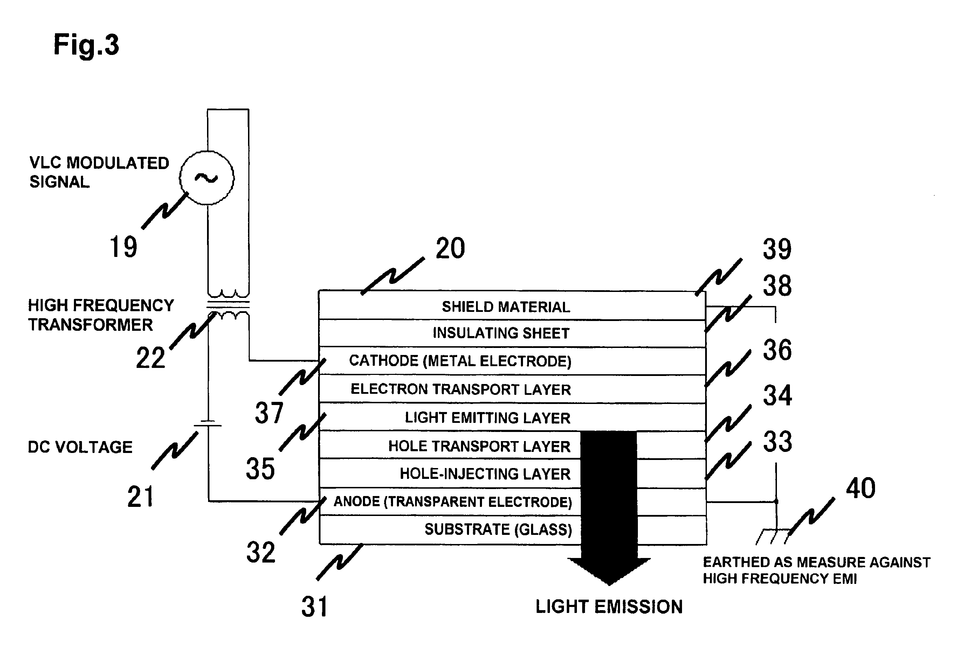

Fig. 3 is a structural diagram of the OLED element 20 used in the in-flight entertainment system according to the present invention. In FIG. 3, the OLED element 20 is formed by laminating on a substrate (glass) 31 an anode (transparent electrode) 32, a hole-injecting layer 33, a hole transport layer 34, a light emitting layer 35, an electron transport layer 36, a cathode (metal electrode) 37, an insulating sheet 38 and a shield member 39, wherein a DC voltage 21 is applied between the anode (transparent electrode) 32 and the cathode (metal electrode) 37 to emit light from the organic EL light emitting layer 35.

Further, a high frequency transformer 22 is disposed between the DC voltage 21 and the cathode (metal electrode) 37 to modulate the light emitted from the light emitting layer 35 based on the visible light communication modulating signals from the visible light communication modulator 19.

A shield member 39 for electromagnetic shielding is disposed on the mounting side of the OLED element 20, which is electrically earthed 40 together with the anode (transparent electrode) on the light emitting side as measures against high frequency EMI, and accordingly, the electrode of the OLED when the OLED element 20 is subjected to data modulation will be the anode (transparent electrode) 32 and the cathode (metal electrode) 37 disposed between the electromagnetic shield 39. This arrangement prevents the modulation signals of the OLED elements from leaking to the exterior and falling out of range of the EMI regulations of aircrafts.

### [Embodiment 2]

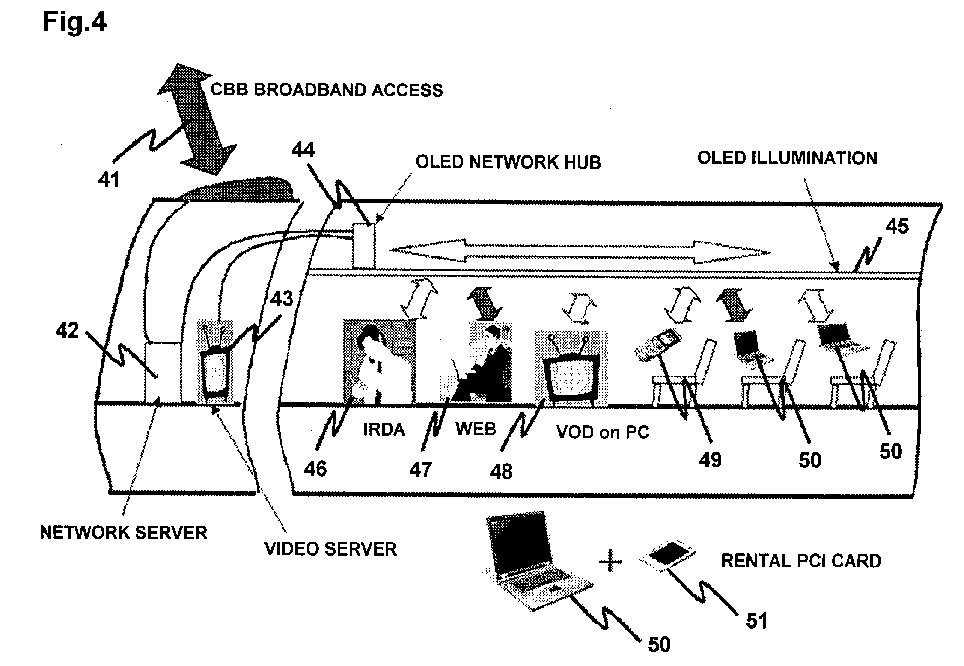

Fig. 4 is an image diagram of another in-flight entertainment system according to the present invention. As shown in Fig. 4, there are no displays for in-flight entertainment systems disposed on the backs or armrests of seats in the cabin according to the prior art, and no seat electronics boxes disposed on the seat ends. All the passengers contact the in-flight entertainment system and the visible light communication circuit via various portable data devices.

Some portable data devices may not be equipped with a function to connect to the visible light communication circuit. In such case, the portable data device must be connected via an external connection port to a visible light communication conversion adapter prepared independently in order to connect to the visible light communication circuit.

Therefore, the visible light communication conversion adapter must correspond to various specifications of the external connection ports of the various portable data devices owned by the passengers, and must be rented to passengers during flight.

An OLED network hub 44 corresponding to a simplified area distribution box is disposed on the upstream side of the visible light communication circuit, which is connected to a video server 43 and a network server 42 corresponding to the cabin file server. The video server 43 stores contents data of movies and music arranged for in-flight entertainment.

Further, the network server 42 communicates via a satellite communication circuit with a ground-based station via CBB (connexion by Boeing) broadband access 41 and stores a temporary data file therein, and provides broadband circuit data to the passengers. As described, the present invention provides an in-flight entertainment system which adopts a future-oriented, new, simple and inexpensive visible light communication system that totally differs from the prior art in-flight entertainment system.

Embodiment 2 shown in Fig. 4 can utilize IRDA (infrared data association) 46, which is a data light communication system using infrared light, capable of accessing the WEB (world wide web, also known as WWW), so that the passengers can use the service of VOD on PC 48 which enables users to view various video contents whenever they wish.

Further, by offering a rental service during flight for renting PCI cards 51 to be inserted to PC card slots of laptop computers to provide connecting ports (interfaces) for connecting LAN cables, the passengers are also enabled to use their cellular phones 49 and personal computers (PC) 50.

## Claims

1. A visible light communication apparatus for in-flight entertainment system in an aircraft cabin comprising:
an illuminating apparatus for illuminating the aircraft cabin via light emitted from an organic EL element; and
a visible light communication apparatus for modulating a light quantity of light emitted from the organic EL element via electric signals to perform communication, so as to construct an in-flight entertainment system for offering information for service to passengers within the aircraft cabin.

2. The visible light communication apparatus for in-flight entertainment system in an aircraft cabin according to claim 1, wherein
the organic EL element is used as the light source for illuminating the aircraft cabin and as a communication means of the in-flight entertainment system constructed in the aircraft to be used as a downward data communication circuit for distributing various contents data for the in-flight entertainment system from an area distribution box to respective seat electronics boxes using a communication means for visible light communication system.

3. The visible light communication apparatus for in-flight entertainment system in an aircraft cabin according to claim 2, wherein
in order to electrically modulate the electric current supplied to an illuminating element of the organic EL element, utilize the intensity of light emitted from the organic EL element for data communication and set a high light modulation frequency that determines the transfer speed of communication data in the visible light communication system, a light wavelength region irradiating only a fluorescence of emission from a singlet having a short attenuation time is used without irradiating phosphorescence from a triplet having a long attenuation time from the organic EL element, so as to set a high modulation frequency and perform high-speed communication.

4. The visible light communication apparatus for in-flight entertainment system in an aircraft cabin according to claim 3, wherein
modulated data is detected from the illuminating light either by setting a light wavelength to be detected by the light receiving sensor to a fluorescence emission wavelength region or by assembling the light receiving sensor with an optical filter for preventing phosphorescence from entering the light receiving sensor.

5. The visible light communication apparatus for in-flight entertainment system in an aircraft cabin according to claim 4, wherein
a white-color organic EL element having combined a blue fluorescence with an orange and green phosphorescence is used, wherein a blue wavelength region having superior emission attenuation characteristics since it does not include phosphorescence is used for data communication so as to enhance transmission speed.

6. The visible light communication apparatus for in-flight entertainment system in an aircraft cabin according to claim 5, wherein
during a dim out period of the aircraft cabin during which the quantity of illuminating light within the cabin is lowered, a current supplied to the white organic LED element is attenuated compared to normal times, wherein the white organic LED element has a characteristics in that red and green-based phosphorescence is attenuated more than the blue-based fluorescence when the current supplied thereto is attenuated from a rated value.
